# EUROPEAN PATENT SPECIFICATION

(11) **EP 3 456 699 B1**
(45) Date of publication and mention of the grant of the patent: **23.11.2022**
(21) Application number: 18192342.6
(22) Date of filing: 04.09.2018
(51) Int. Cl.: C04B 41/85, F01D 5/00, C23C 24/10

(54) **REPAIR METHODS FOR SILICON-BASED COMPONENTS**
REPARATURVERFAHREN FÜR SILICIUMBASIERTE BAUTEILE
PROCÉDÉS DE RÉPARATION DE COMPOSANTS À BASE DE SILICIUM

(30) Priority: 14.09.2017 IN 201741032589
(43) Date of publication of application: 20.03.2019
(60) Divisional application: 22201564.6
(73) Proprietor: General Electric Company, Schenectady, NY 12345 (US)
(72) Inventor: SAHA, Atanu, 560066 Bangalore, Karnataka (IN); LIPKIN, Don Mark, Niskayuna, NY New York 12309 (US); MANEPALLI, Satya Kishore, 560066 Bangalore, Karnataka (IN); ANTOLINO, Nicholas Edward, Niskayuna, NY New York 12309 (US)
(74) Representative: Openshaw & Co.

(56) References cited:
- EP-A1- 3 040 387
- WO-A1-2018/128676
- DE-A1-102006 040 385
- US-A- 4 249 947

## Description

### BACKGROUND

This disclosure relates generally to methods for repairing a silicon-based component. More particularly, the disclosure relates to methods for repairing silicon-based components using a patching material that includes nanoparticles.

Silicon-based materials are being employed for high temperature components of gas turbine engines such as airfoils (e.g., blades, vanes), combustor liners, and shrouds. The silicon-based materials may include silicon-based monolithic ceramic materials, intermetallic materials, and composites. Silicon-based ceramic matrix composites (CMCs) may include silicon-containing fibers reinforcing a silicon-containing matrix phase.

Although silicon-based materials exhibit desirable high temperature characteristics, such materials often suffer from rapid recession in combustion environments. For example, the silicon-based materials are susceptible to volatilization upon high-temperature exposure to reactive species such as water vapor. Protective coatings, such as environmental barrier coatings (EBCs), are often employed to prevent the degradation of silicon-based materials in a corrosive water-containing environment by inhibiting the ingress of water vapor and the subsequent formation of volatile products such as silicon hydroxide (e.g., Si(OH)₄). Thus, an EBC enhances the high temperature environmental stability of silicon-based substrates comprising the silicon-based materials. Other desired properties for the EBC include thermal expansion compatibility with the silicon-based substrate, low permeability for oxidants, low thermal conductivity, and chemical compatibility with thermally grown silicon-based oxide.

If an EBC experiences a localized spall or a pinhole defect, the underlying substrate may be subjected to overheating and material loss resulting from water vapor-induced volatilization leading to subsequent surface recession. If allowed to grow unmitigated, such overheating and material loss may reduce the load-bearing capability of the component, disrupt airflow, or even progress to through-thickness holes. This can further lead to ingestion of combustion gases or leakage of highpressure cooling air, and can adversely affect the operating efficiency and durability of the machine. Current methods of repairing a damaged EBC require engine disassembly and shop-based component repair. US4249947 A relates to repairing mortars for silicon carbide bricks for smelting furnace structures. DE102006040385 A1 relates to sizing liquids useful for the production of a high temperature-stable coating. WO2018128676 A1 relates to methods of forming a sintered bond coat on a silicon-based substrate and articles formed by the methods. EP3040387 A1 relates to a silicon-based patch formulation. A process to locally repair the EBC is therefore desired. This includes, for example, on-wing repair, in-module repair (e.g., in an overhaul shop), and localized component repair (e.g., in a component repair shop).

### BRIEF DESCRIPTION

In one aspect, a method for forming a patch repaired portion of a silicon-based component is disclosed. The method includes applying a patch on a damaged area of the silicon-based component, drying the patch to form a dried patch, and sintering the dried patch to form the patch repaired portion of the silicon-based component. The patch includes a patching material, which includes a plurality of nanoparticles having a median particle size less than 100 nanometers. The plurality of nanoparticles includes at least one of silicon, a silicon alloy, silica, or a metal silicate.

In another aspect, a method for forming a patch repaired portion of a silicon-based component is disclosed. The method includes applying a slurry on a damaged area of the silicon-based component disposed in a turbine engine assembly, drying the slurry to form a dried patch, and sintering the dried patch in situ to form the patch repaired portion. The slurry includes a patching material that includes a plurality of nanoparticles having a median particle size less than 100 nanometers, wherein the plurality of nanoparticles comprises at least one of silicon, a silicon alloy, silica, or a metal silicate.

### DRAWINGS

Various features, aspects, and advantages of the present disclosure will become better understood when the following detailed description is read with reference to the accompanying drawings in which like characters represent like parts throughout the drawings. Unless otherwise indicated, the drawings provided herein are meant to illustrate only the key features of the disclosure. These key features are believed to be applicable in a wide variety of systems which comprise one or more embodiments of the invention.
FIG. 1 is a schematic cross-sectional view of a silicon-based component including an EBC.
FIG. 2 is a schematic cross-sectional view of a silicon-based component that is damaged in the surface region at one or more locations, in accordance with some embodiments of the present disclosure.
FIG. 3 is a schematic cross-sectional view of an article having patch repaired portions, in accordance with some embodiments of the present disclosure.

### DETAILED DESCRIPTION

In the following specification and the claims that follow, singular forms "a," "an," and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term "about" may not be limited to the precise value specified, and may include values that differ from the specified value. A value modified by a term "substantially" can include values that differ to an extent that the intended function is maintained. In at least some instances, the approximating language may correspond to the precision of an instrument for measuring a value.

To more clearly and concisely describe and point out the subject matter, the following definitions are provided for specific terms, which are used throughout the following description and the appended claims, unless specifically denoted otherwise with respect to particular embodiments.

As used herein, a "silicon-based component" is any silicon containing high-temperature component. A silicon-based component includes a silicon-based substrate with one or more optional protective coatings. The term "sintering in situ" is used to refer to a sintering that is carried out on an operating component in its normal operating environment. For example, a coating on a turbine blade may be sintered in situ in a turbine during the operation of the turbine. A "fluid carrier" is a fluid that is mixed with the patching material to form a slurry. A "dimension-stabilizing particle" is a particle that prevents excessive shrinkage of the patch during sintering and subsequent use at operating temperatures. In some embodiments, the dimension-stabilizing particles are themselves resistant to sintering shrinkage, undergoing less than 5% volumetric shrinkage after 10 hours at 1350 degrees Celsius (°C). In other embodiments, the dimension-stabilizing particles limit the linear shrinkage of the patch to less than 2% upon heating 10 hours at 1350°C.

Some embodiments of this disclosure recite a method for forming a patch repaired portion of a silicon-based component. The method for forming the patch repaired portion of the silicon-based component includes applying a patch to a damaged area of the silicon-based component, drying the patch to form a dried patch, and sintering the dried patch to form the patch repaired portion of the silicon-based component. The patch includes patching material. The patching material includes a plurality of nanoparticles having a median particle size less than 100 nanometers. The plurality of nanoparticles includes at least one of silicon, a silicon alloy, silica, or a metal silicate. Thus, the plurality of nanoparticles may include silicon, a silicon alloy, silica, a metal silicate, or any combinations thereof. The silicon may be in its elemental form. In some embodiments, silicon alloy includes silicon boron alloy. An example of silicon boron alloy that may be included in the patching material in the form of plurality of nanoparticles is Si-5B. The metal silicate may include alkali metals, alkaline earth metals, transition metals, rare earth metals, or any combinations thereof. In some embodiments, the plurality of nanoparticles includes at least one of silicon, silica, or a metal silicate. The plurality of nanoparticles aids in initiation of sintering at temperatures that is lower than normally known for silicon-based components.

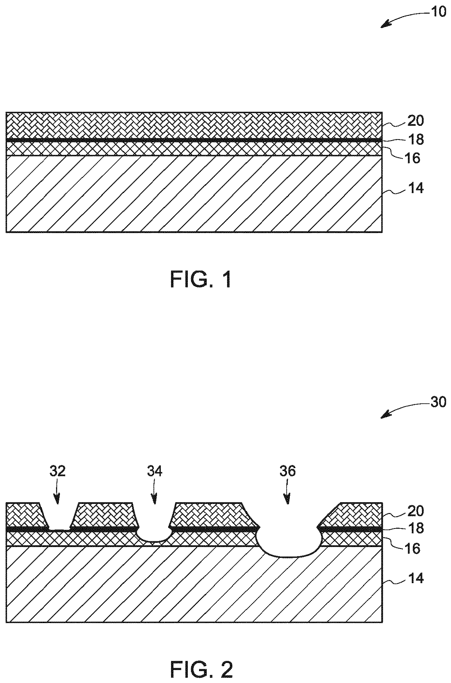

FIG. 1 is a cross-sectional view of a component 10 for use at high temperatures, in accordance with one or more aspects of the present disclosure. In some embodiments, the component 10 may be a gas turbine engine component such as a blade, vane, combustor liner, or shroud. In the illustrated figure, a substrate 14 is provided. The substrate 14 is a silicon-based substrate that may be selected for its high temperature mechanical, physical, and/or chemical properties. The silicon-based substrate may include any silicon-containing material such as a silicon-containing ceramic (e.g., silicon carbide (SiC), silicon nitride (Si₃N₄), silicon oxynitride, silicon aluminum oxynitride); a composite including a matrix that includes a silicon-containing ceramic such as SiC or Si₃N₄; a silicon containing metal alloy; or a silicon-containing intermetallic (e.g., molybdenum-silicon alloys, niobium-silicon alloys). In some embodiments, the silicon-based substrate includes a SiC-based ceramic matrix composite (CMC), which includes a silicon carbide containing matrix reinforced with silicon carbide fibers. In another example, the silicon-based substrate may be a silicon-based monolithic ceramic material, for instance SiC, Si₃N₄, or a combination of SiC and Si₃N₄. In some embodiments, the silicon-based substrate may be fabricated from a material that can withstand combustion environments at operating temperatures greater than 1150 °C for a duration exceeding 20,000 hours. In FIG. 1, a bond coat 16 is present over the substrate 14, a silica layer 18 is present over the bond coat 16, and an EBC 20 is present over the silica layer 18.

The bond coat 16 is a chemical barrier preventing oxidation of the substrate 14, generally by forming a protective thermally grown silicon oxide 18 during service. In some embodiments, the bond coat 16 includes elemental silicon, a silicon alloy, a metal silicide, or combinations thereof. The bond coat may have a thickness in a range from about 25 microns to about 150 microns. In some embodiments, the silica layer 18 may have an initial (as-formed) thickness in a range from about 0.1 micron to about 10 microns. The thickness of the silica layer 18 may further increase due to the oxidation of the underlying bond coat 16 when the component is being put to use in an engine.

The EBC 20 generally provides a thermal barrier, and also acts as a hermetic seal against the corrosive gases in the hot combustion environment and thus protect the underlying silica layer 18, bond coat 16, and silicon-based substrate 14 from overheating and/or thermochemical attack. Thus, the protective coatings present over silicon-based substrate 14, as noted above, advantageously facilitate inhibition of oxidation, overheating, and/or volatilization of the silicon-based substrate material in a hot combustion environment of a gas turbine engine.

The EBC 20 may include one or more layers. In some embodiments, the EBC 20 may have a thickness in a range from about 25 microns to about 1000 microns. In some embodiments, the EBC 20 may include one or more rare earth (RE) silicates. As used herein, "a RE silicate" refers to a silicate of one or more RE elements. In some embodiments, the silicate of the RE element may include, but is not limited to, a RE monosilicate (RE₂SiO₅), a RE disilicate (RE₂Si₂O₇), or a combination of RE₂SiO₅ and RE₂Si₂O₇. In some embodiments, the RE element in the RE silicate may be chosen from yttrium, scandium, and elements of the lanthanide series. By way of example, the RE elements may include yttrium, ytterbium, or lutetium.

Optionally, one or more additional coatings may be present above or below the EBC 20 to provide additional functions to the component 10, such as further thermal barrier protection, recession resistance, abradable sealing, thermochemical resistance to corrosion, resistance to erosion, resistance to impact damage, resistance to inter-diffusion between adjacent layers, or any combinations thereof. In some embodiments, the EBC 20 and the optional one or more coatings may have a coefficient of thermal expansion that is substantially close to a coefficient of thermal expansion of the silicon-based substrate 14. Typically, a mismatch in coefficient of thermal expansion between EBC and the silicon-based substrate is within ±3 × 10⁻⁶ per degree Kelvin.

FIG. 2 is a cross-sectional view of an exemplary damaged silicon-based component 30, having one or more damaged areas 32, 34, 36 on its surface. Depending on the severity of the damage to the silicon-based component 30, there may be partial or complete loss of the EBC 20. Material loss may further lead to recession in one or more of the silica layer 18, bond coat 16 and silicon-based substrate 14. As illustrated in Fig. 2, material loss confined to the EBC 20 or to a combination of EBC 20 and the silica layer 18 defines the damaged area 32, material loss in the EBC 20 and bond coat 16 defines the damaged area 34, and material loss in the EBC 20, bond coat 16, and silicon-based substrate 14 defines the damaged area 36. Methods of patch repairing various coatings as described above using engine operating conditions to sinter the patching material are described in this disclosure through an example of in situ patch repair of a damaged area of an EBC coated component.

Currently known methods for repairing a damaged area using a patching material suffer from poor cohesive and adhesive strength of the patching material, which can lead to loss of the patching material during engine restart for the first time after patch repairing. Strength of the patching material at lower temperatures is generally imparted by binders, while strength of the patching material at higher temperatures is generally a result of inter-particle bonding by sintering. To execute an in situ repair of a damaged area, it is desirable to maintain patch strength during exposure to an intermediate temperature range where the binder is already decomposed while the oxide particles have not begun to sinter. Maintaining patch strength at low, intermediate and high temperatures allows the patch to withstand the rapid thermal transients and high mass flow of combustion gases under engine operating conditions. To overcome the disadvantage of losing intermediate temperature strength, currently known repair methods include heat treating the patched component to a sintering temperature through auxiliary heating methods prior to engine operation. However, the need to heat treat the patched component makes it difficult to execute in situ repairs.

The methods described herein overcome the known challenges of forming an in situ repair without requiring auxiliary heating methods. The methods include restoration/repair of damaged areas using one or more processes using a patching material containing a plurality of nanoparticles. Non-limiting examples of methods for disposing the patch on the damaged areas 32, 34, 36 may include paste dispensing, spray coating, spin coating, slip casting, tape casting and lamination, and gel casting.

The disposed patch is dried to form a dried patch. Drying of the patch may be carried out in situ in an engine environment before subjecting the patch to high temperature operating conditions of the engine. For example, drying may be carried out by allowing the liquid carrier of the patch material to naturally evaporate under ambient conditions. Alternatively, drying may be accelerated using heat, convective gas flow, or a combination of the two. The strength and density of the dried patch may depend on one or more of the relative amount of ceramic powder in the patching material, particle size distribution of the powder, and the processing methods used for disposing the patch, among other aspects. The patching material includes a plurality of nanoparticles having a mass median diameter less than 100 nanometers. The mass median diameter may be measured using various methods, for example, using laser scattering. In some embodiments, the nanoparticles have a median particle diameter in a range from 1 nanometer to 100 nanometers. In certain embodiments, the median particle size of the nanoparticles is in a range from 5 nanometers to 50 nanometers. The nanometer sized particles reduce the onset temperature for sintering, allowing bonding of the patching material particles to each other and to the substrate at temperatures that approach or overlap the binder burn out temperature of the dried patch. In some embodiments, the binder burnout happens in a range from 300 °C to 700 °C and an onset temperature of sintering is in a range from 500 °C to 1000 °C. A ceramic green body normally has a green strength in the presence of the binder, becomes weak after binder burnout, and again gains strength upon sintering. Joining or overlapping the binder burnout temperatures with the sintering temperature ensures strong bonding throughout the processing temperature range. In some embodiments including the nanometer sized particles, the sintering starts at a temperature below 700 °C and provides adequate strength to the patch even before the complete burnout of the binder. To be effective at sintering the dried repair patch, in some embodiments, the patching material may include the plurality of nanoparticles in an amount greater than 2 volume percent. In some embodiments, the patching material may include the plurality of nanoparticles in an amount in a range from about 3 volume percent to about 20 volume percent.

The plurality of nanoparticles of the patching material includes silicon, a silicon alloy, silica, a metal silicate, or any combination including one or more of these listed materials. In some embodiments, some nanoparticles of the plurality of nanoparticles are made of the same material as the EBC material. An EBC material may be a material that is used for the construction of the EBC 20. In some embodiments, the plurality of nanoparticles includes an element, alloy, or a chemical compound that participates in a reaction to form the EBC. The reaction may be a decomposition reaction or a reaction with another element, alloy, or a chemical compound. In some embodiments, along with at least one of silicon, a silicon alloy, silica, or a metal silicate, the plurality of nanoparticles further includes a rare earth metal element. Thus, in some embodiments, at least some nanoparticles of the plurality of nanoparticles are one or more rare earth (RE) metal element or silicon. In some embodiments, the plurality of nanoparticles may include one or more RE metal element and silica. In some embodiments, a molar ratio of the RE metal element to silicon or silica is in a range from about 0.9 to about 2.5. In some other embodiments, a molar ratio of the RE metal element to silicon or silica is in a range from about 0.95 to about 1.25. In some embodiments, at least some nanoparticles of the plurality of nanoparticles have the composition of a rare earth monosilicate (RE₂SiO₅), a rare earth disilicate (RE₂Si₂O₇), or a combination thereof. In some embodiments, the plurality of nanoparticles includes ytterbium monosilicate, ytterbium disilicate, yttrium monosilicate, yttrium disilicate, or a combination including one or more of these.

Apart from presence of nanometer sized particles, an overall particle size distribution of the patching material may be important in determining the mechanical integrity, degree of hermeticity, and processability of the disposed patch. In some embodiments, the patching material includes a plurality of particles having a multimodal distribution. A multimodal distribution of particles improves packing density by filling voids created by coarser particles with finer particles. Coarser particles provide a shrinkage-resistant backbone to the patch while finer particles, in addition to increasing the packing density of the patching material, promote sintering and bonding to adjacent particles and to the substrate. A multimodal distribution of the particles in the patching material thus helps minimize shrinkage (during drying and/or sintering), thereby mitigating cracking and delamination during densification of thick patches.

In some embodiments, the patching material includes a bimodal distribution of particles comprising a plurality of nanoparticles and a plurality of large particles. In some embodiments, the patching material includes a trimodal distribution of particles that includes the plurality of nanoparticles, a plurality of large particles, and one of a plurality of small particles and a plurality of medium particles. In some embodiments, along with the presence of a plurality of nanoparticles having size less than 100 nanometers, the patching material further includes a plurality of small particles with median particle size in a range from 0.7 micron to less than 5 microns; a plurality of medium particles with median particle size in a range from 5 microns to 10 microns; and a plurality of large particles with median particle size greater than 10 microns. Appropriate selection and control of size and volume fractions of the large, medium, small, and nanoparticles aids in providing the patch repaired portion with the desired properties for a particular application.

In some embodiments, patching material includes the plurality of nanoparticles, the plurality of small particles in an amount in a range from 15 volume percent to 35 volume percent, the plurality of medium particles in an amount in a range from 15 volume percent to 35 volume percent, and the plurality of large particles in an amount in a range from 40 volume percent to 65 volume percent of the patching material. In some embodiments, wherein the patching material includes the plurality of nanoparticles and the plurality of small particles, a combined amount of the plurality of nanoparticles and the plurality of small particles in the patching material is less than 40 volume percent of the patching material. In some embodiments, a combined amount of the plurality of nanoparticles and the plurality of small particles in the patching material is in a range from about 15 volume percent to about 35 volume percent of the patching material.

Apart from multimodal distribution of particles in the patching material, reactivity of particles present in the patching material may play an important role in the formation of an in situ repair. According to the invention, the patching material includes a plurality of dimension-stabilizing particles. While highly reactive nano-sized particles in the patching material are found to be advantageous for an early onset of sintering, the presence of dimension-stabilizing particles in the patching material was found to be beneficial to provide a stable backbone to the patch, by limiting shrinkage and thereby preventing cracking, delamination or separation of patch from the existing coating or substrate. Accordingly, in some embodiments, the patching material for the repair of the damaged area includes some dimension-stabilizing particles. In some embodiments, a dimension-stabilizing particle is a fused particle. A fused particle is a particle that has previously undergone a high temperature heat treatment above the melting temperature of the particle. In some embodiments, at least 30 volume percent of the patching material is in the form of dimension-stabilizing particles. In some embodiments, the plurality of large particles of the patching material include dimension-stabilizing particles. In some embodiments, at least 50 volume percent of a combination of large particles and medium particles are dimension-stabilizing particles. In some embodiments, at least 50 volume percent of medium particles in the patching material are dimension-stabilizing particles. In some embodiments, the dimension-stabilizing particles present in the patching materials include fused silicates. In some embodiments, the dimension-stabilizing particles are the fused form of rare earth silicates that form a part of the EBC material of the repaired component.

Further aspects of the methods of repairing a damaged silicon-based component are described herein disclosing an example embodiment of repairing damaged portions of the silicon-based component 30. The method described herein enhances sintering kinetics by modifying the slurry chemistry and carefully controlling various parameters in slurry-based deposition. In some embodiments, applying the patch to repair a damaged silicon-based component 30 includes applying a slurry to the damaged area 32, 34, 36, or any combinations of 32, 34, or 36. The strength, density, degree of oxidation, and hermeticity of a patch repaired portion may depend on the slurry characteristics and/or processing methods. For example, the slurry characteristics can be varied by varying relative amount of the patching material and the fluid carrier, particle size distribution of the patching material, type and amount of binder and amount of sintering aids (if present), or any combination thereof. These properties may further vary depending on the processing methods, for example, the methods used for applying the slurry, drying the slurry to form dried patch, and/or sintering the dried patch.

Relative amounts of patching material and the fluid carrier in the slurry may affect the consistency and viscosity of the slurry as well as the porosity, adhesion and/or strength of the dried patch and the resulting patch repaired portion. In some embodiments, the slurry includes the patching material in an amount from 30 volume percent to 70 volume percent of the slurry, the balance comprising the fluid carrier. In some embodiments, the slurry includes the patching material in an amount from about 40 volume percent to about 60 volume percent.

Referring, for example, to FIG. 2, the slurry may be applied directly onto the substrate 14 (damaged area 36), onto a remaining portion of the bond coat 16 (damaged area 34), onto a remaining portion of the EBC 20 and/or the silica layer 18 (damaged area 32), or a combination thereof, depending on the extent of damage in silicon-based component 30.

In some embodiments, the patching material may include at least one of a binder or a sintering aid. The binder in the patching material facilitates application of the slurry to the damaged area, promotes adhesion of the slurry to the damaged area and/or improves the green strength of the slurry after drying. The binder may be an inorganic binder or an organic binder. In some embodiments, the binder may be a silicon-based resin material such as a cross-linked polyorganosiloxane resin. In some embodiments, the cross-linked polyorganosiloxane resin is a silicone resin. For example, the silicone resin may include phenyl and methyl silsesquioxanes and methyl siloxanes.

Various compositions and amounts of sintering aids may be used to promote strengthening and/or densification of the patch. In some embodiments, the sintering aid includes metal oxides. Non-limiting examples of metal oxides that can be used as sintering aid include iron oxide, gallium oxide, aluminum oxide, nickel oxide, titanium oxide, boron oxide, alkaline earth oxides, or any combinations of one or more of these. Non-limiting examples of metallic oxide sintering aids include iron oxide and aluminum oxide. In an example embodiment, a mixture of iron oxide and aluminum oxide is used as a sintering aid. In some embodiments, a sintering aid includes a metal. Non-limiting examples of metal sintering aids include iron, aluminum, boron, nickel, or any combinations thereof. In some embodiments, the metal sintering aid may at least partially oxidize and the resulting metal oxide may function as the metal oxide sintering aid.

A general process for preparing the slurry includes mixing the silicon-based powder, the binder, and the sintering aid, if present, with the fluid carrier. The slurry may be formed using conventional techniques of mixing known to those skilled in the art such as shaking, ball milling, attritor milling, or mechanical mixing. Dispersants may be used to prevent agglomeration of particles of the silicon-based powders and/or sintering aids, if the latter are used. Ultrasonic energy may be simultaneously used along with the above-mentioned mixing methods to help break apart any agglomerated particles that may be present in the slurry.

In some embodiments, the patching material includes the binder in an amount from about 2.5 weight % to about 8 weight % of the patching material. In certain embodiments, the patching material includes the binder in an amount from about 4 weight % to about 6 weight % of the patching material. In some embodiments, the patching material includes the binder in an amount from about 10 volume % to about 30 volume % of the patching material. In some embodiments, the patching material includes the sintering aid in an amount from about 0.5 weight % to about 4.5 weight % of the patching material. In certain embodiments, the patching material includes the sintering aid in an amount from about 1 weight % to about 3 weight % of the patching material.

In some embodiments, the fluid carrier may partially or fully dissolve the binder, the sintering aid, or a combination thereof. The fluid carrier may be organic or aqueous. In certain embodiments, water is used as the fluid carrier. In some embodiments, depending on the patching material and/or its content in the slurry, the fluid carrier may be tailored for a reasonable stability of the slurry. Stability of a slurry may be measured by the extent of time the homogeneity of the slurry is maintained. Stability of the slurry may be measured using a sedimentation method. Depending on the slurry deposition methods used for applying the patch, vapor pressure of the fluid carrier in the slurry may be tailored. In some embodiments, the slurry includes a fluid carrier that has a vapor pressure at 20 °C in a range from 0.1kPa to 60kPa. The fluid carrier is selected such that its vapor pressure is sufficiently high to allow drying under ambient conditions while being sufficiently low to maintain the carrier during the application process. Non-limiting examples of suitable fluid carriers include 4 hydroxy-4 methyl-2-pentanone (diacetone alcohol), 1-hexanol, acetylacetone, water, or combinations thereof. In some embodiments, the fluid carrier includes 4 hydroxy-4 methyl-2 pentanone.

In some embodiments, the slurry may be disposed on the damaged area 32, 34, 36 of the damaged silicon-based component 30 to make a patch using any conventional slurry deposition method known to those skilled in the art, including but not limited to, dipping the component into a slurry bath, painting, rolling, stamping, spraying, syringe-dispensing, extruding, spackling, applying pre-cast tapes or pouring the slurry onto the damaged area 32, 34, 36 of the silicon-based substrate. In some embodiments, some portions of undamaged areas of the EBC 20 or uncoated substrate 14 may be masked to prevent deposition of the slurry onto said undamaged areas.

An example method of forming a patch repaired silicon-based component 40 includes applying a slurry on a damaged area of a damaged silicon-based component 30, drying the slurry to form a dried patch, and sintering the dried patch in situ to form a patch repaired silicon-based component. The slurry includes a patching material. The patching material includes a plurality of nanoparticles having a median particle size less than 100 nanometers. The plurality of nanoparticles includes at least one of silicon, silicon alloy, silica, or a metal silicate.

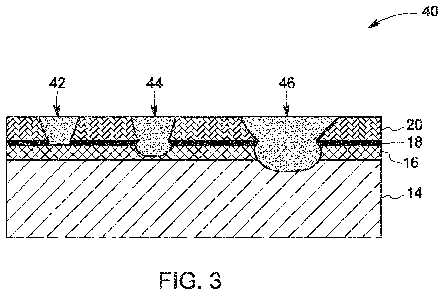

In some embodiments, drying of the patch is performed under ambient conditions through evaporation of the solvent. During in situ repair of the component 10, both the drying of the patch and sintering of the dried patch are achieved in situ. For example, the applied patch may be dried at ambient temperature before or during high temperature operation of component 10 and subsequently sintered during the high temperature operation of the component 10. For example, during operation of the turbine, the surrounding temperature is sufficiently high to sinter the dried patch. In some embodiments, the sintering includes heating a portion of the component 10 having the dried patch to an operating temperature of at least 1000 °C. In some embodiments, the sintering includes heat-treating at least a portion of the dried patch at a temperature between about 1000 °C and about 1400 °C by the operation of the turbine. Rate of heating of the portion of the dried patch by the operation of the engine may be greater than 3000 °C/min. In some embodiments, sintering is performed in an atmosphere containing air. In some embodiments, the atmosphere during sintering includes combustion gases. The in situ sintering forms the patch repaired portions 42, 44, 46 of a patch repaired silicon-based component 40, as shown in FIG. 3. The patch repaired portions 42, 44, 46 substantially retards further in-service degradation of the substrate 14 by providing a thermal barrier between the ambient atmosphere and the substrate 14 and by decreasing fluid communication between the oxidizing atmosphere (comprising, for example, oxygen, carbon dioxide and/or water vapor) and the substrate 14, thereby increasing life of the patch repaired silicon-based component 40.

### EXAMPLE

The following example illustrates methods, materials, and results, in accordance with specific embodiments, and as such should not be construed as imposing limitations upon the claims. All components are commercially available from common chemical suppliers.

### Preparation of ytterbium yttrium disilicate (YbYDS) Nano Powders:

YbYDS powders having a median particle size of less than 100 nanometers were synthesized by co-precipitation using yttrium oxide, ytterbium oxide and tetraethyl orthosilicate (TEOS) as reagents. Required amounts of yttrium oxide and ytterbium oxide to yield Yb:Y in the ratio of 0.8:1.2 were mixed in 35% nitric acid solution and stirred at 60 °C for 24h, resulting in a clear solution of yttrium-ytterbium nitrate. Calculated amount of TEOS to yield Yb_{0.8}Y_{1.2}Si₂O₇ (YbYDS) was added to the nitrate solution without formation of precipitates. In one instance of preparing YbYDS powders, about 3.278 g of Y₂O₃, about 3.814 g of Yb₂O₃, and about 10.082 g of TEOS was used. 20ml of 15wt% Ammonium hydroxide (NH₄OH) solution was added to the nitrate solution to co-precipitate rare earth hydroxide and silicon hydroxide. The precipitate obtained was first washed with water and subsequently with ethanol for 2 times before drying in an oven at 100 °C for 15h. The obtained powder was calcined at temperatures ranging from 400 °C to 1315 °C to study the phase formation of the products. Observation under Scanning Electron Microscope (SEM) revealed the formation of nano powders of silica and RE oxides when powders were calcined for 5 hours at 400 °C. Above 800 °C, silicate formation was observed. The rare earth disilicate (Y_{1.2}Yb_{0.8}Si₂O₇) was formed after calcining for 5 hours at 1300 °C.

### Preparation of slurry using YbYDS Nano powders:

Nano YbYDS powder obtained by calcining the above-mentioned co-precipitated powder for 5 hours at 400 °C was used for making the patching slurry. Other components of the powders were: (1) fused and crushed particles of (Y,Yb)₂Si₂O₇ having a median particle size (d50) of about 26 µm (large particles) (2) particles of (Y,Yb)₂Si₂O₇ milled to d50 ~ 8 µm (medium particles), and (3) mixture of Yb₂Si₂O₇ and Y₂SiO₅ having d50 ~ 1 µm (small particles). Constituent powders were weighed as given in Table 1 and mixed gently in an agate mortar. Silicone resin constituting approximately 3 wt.% of total powder weight was used as the binder and dissolved in 4 hydroxy-4 methyl-2 pentanone solvent. The silicate powder mixture was added to the dissolved binder solution and mixed until homogenized. Approximately 0.8g of the resulting slurry was applied to 1 inch x1 inch flat SiC coupons. After oven drying at 100 °C for 2h, the patched coupons were transiently heat treated by introducing into a furnace preheated to 1315 °C and keeping them at 1315 °C for 6 hours for sintering. Patched coupons were sintered isothermally at different temperatures between 700 °C-1000 °C for 1 hour and characterized in customized water jest erosion test rig at a pressure of 8 bar. It was observed that qualitatively both adhesion and cohesive strength of sintered patches, as measured by transient heat treatment and water jet erosion test, respectively, were improved when nanoparticles were added to the patch, compared to baseline patch without nanoparticles.

**Table 1. Contents and amounts of slurry components**

| Slurry Component | | Weight (g) |
|---|---|---|
| Small Particles | Y₂SiO₅, d50 ~ 1µm | 1.78 |
| | Yb₂Si₂O₇, d50 ~ 1 µm | 4.50 |
| Medium Particles | (Y,Yb)₂Si₂O₇, d50 ~ 8 µm | 4.91 |
| Large Particles | (Y,Yb)₂Si₂O₇, d50 ~ 26 µm | 8.58 |
| Nano Particles | co-precipitated YbYDS, d50 ~ 50 nm | 1.05 |
| Binder | Silicone resin | 0.63 |
| Fluid Carrier | 4 hydroxy-4 methyl-2 pentanone | 2.20 |

While the invention has been described in detail in connection with only a limited number of embodiments, it should be readily understood that the invention is not limited to such disclosed embodiments.

Additionally, while various embodiments of the invention have been described, it is to be understood that aspects of the invention may include only some of the described embodiments. Accordingly, the invention is not to be seen as limited by the foregoing description, but by the scope of the appended claims.

## Claims

1. A method comprising:
(a) applying a patch comprising a patching material on a damaged area (32, 34, 36) of a silicon-based component (30), wherein the patching material comprises a plurality of nanoparticles having a median particle size less than 100 nanometers, and wherein the plurality of nanoparticles comprises at least one of silicon, silicon alloy, silica, or a metal silicate;
(b) drying the patch to form a dried patch; and
(c) sintering the dried patch to form a patch repaired portion (42, 44, 46) of the silicon-based component; wherein
the silicon-based component is disposed in a turbine engine assembly;
the sintering is carried out in situ using engine operating conditions of the turbine engine assembly; and
the patching material includes a plurality of dimension-stabilizing particles.

2. The method of claim 1, wherein the plurality of nanoparticles further comprises a rare earth element.

3. The method of claim 1 or 2, wherein the patching material comprises the plurality of nanoparticles in an amount greater than 2 volume percent.

4. The method of claim 3, wherein the patching material comprises the plurality of nanoparticles in an amount in a range from 3 volume percent to 20 volume percent.

5. The method of any one of claims 1 to 4, wherein the patching material further comprises a plurality of small particles with median particle size in a range from 0.7 micron to less than 5 microns; a plurality of medium particles with median particle size in a range from 5 microns to 10 microns; and a plurality of large particles with median particle size greater than 10 microns.

6. The method of claim 5, wherein the plurality of small particles is present in an amount in a range from 15 volume percent to 35 volume percent, the plurality of medium particles is present in an amount in a range from 15 volume percent to 35 volume percent, and the plurality of large particles is present in an amount in a range from 40 volume percent to 65 volume percent of the patching material.

7. The method of claim 5 or 6, wherein at least 30 volume percent of the patching material is in the form of dimension-stabilizing particles.

8. The method of claim 7, wherein the plurality of large particles comprises at least a portion of the dimension-stabilizing particles, and preferably the dimension-stabilizing particles comprise fused metal silicates.

9. The method of any one of claims 1 to 8, wherein applying the patch comprises applying a slurry comprising the patching material and a fluid carrier.

10. The method of claim 9, wherein the slurry comprises the patching material in an amount in a range from 30 volume percent to 70 volume percent of the slurry.

11. The method of claim 9 or 10, wherein the slurry comprises a fluid carrier having a vapor pressure at 20°C in a range from 0.1kPa to 60kPa, and wherein preferably the fluid carrier comprises 4 hydroxy-4 methyl-2 pentanone.

12. The method of any one of claims 1 to 11, wherein the sintering comprises heating at least one portion of the silicon-based component comprising the dried patch to an operating temperature of at least 1000 degrees Celsius.

13. The method of claim 12, wherein a rate of heating the portion of the silicon-based component to the operating temperature is greater than 3000 degrees Celsius per minute.

## Patentansprüche

1. Verfahren, umfassend:
(a) Aufbringen eines Patches, umfassend ein Patchmaterial auf einen beschädigten Bereich (32, 34, 36) einer siliziumbasierten Komponente (30), wobei das Patchmaterial eine Vielzahl von Nanopartikeln umfasst, die eine mittlere Partikelgröße von weniger als 100 Nanometern aufweisen, und wobei die Vielzahl von Nanopartikeln mindestens eines von Silizium, Siliziumlegierung, Siliziumdioxid oder einem Metallsilikat umfasst;
(b) Trocknen des Patches, um ein getrocknetes Patch auszubilden; und
(c) Sintern des getrockneten Patches, um einen mit einem Patch reparierten Abschnitt (42, 44, 46) der siliziumbasierten Komponente auszubilden; wobei
die siliziumbasierte Komponente in einer Turbinenmotoranordnung eingerichtet ist;
das Sintern in situ unter Verwendung von Motorbetriebsbedingungen der Turbinenmotoranordnung erfolgt; und
das Patchmaterial eine Vielzahl von dimensionsstabilisierenden Partikeln einschließt.

2. Verfahren nach Anspruch 1, wobei die Vielzahl von Nanopartikeln ferner ein Seltenerdelement umfasst.

3. Verfahren nach Anspruch 1 oder 2, wobei das Patchmaterial die Vielzahl von Nanopartikeln in einer Menge von mehr als 2 Vol.-% umfasst.

4. Verfahren nach Anspruch 3, wobei das Patchmaterial die Vielzahl von Nanopartikeln in einer Menge in einem Bereich von 3 Vol.-% bis 20 Vol.-% umfasst.

5. Verfahren nach einem der Ansprüche 1 bis 4, wobei das Patchmaterial ferner eine Vielzahl von kleinen Partikeln mit mittlerer Partikelgröße in einem Bereich von 0,7 Mikrometer bis weniger als 5 Mikrometer; eine Vielzahl von mittelgroßen Partikeln mit mittlerer Partikelgröße in einem Bereich von 5 Mikrometer bis 10 Mikrometer; und eine Vielzahl von großen Partikeln mit mittlerer Partikelgröße von mehr als 10 Mikrometern umfasst.

6. Verfahren nach Anspruch 5, wobei die Vielzahl von kleinen Partikeln in einer Menge in einem Bereich von 15 Vol.-% bis 35 Vol.-% vorhanden ist, die Vielzahl von mittelgroßen Partikeln in einer Menge in einem Bereich von 15 Vol.-% bis 35 Vol.-% vorhanden ist, und die Vielzahl von großen Partikeln in einer Menge in einem Bereich von 40 Vol.-% bis 65 Vol.-% des Volumens des Patchmaterials vorhanden ist.

7. Verfahren nach Anspruch 5 oder 6, wobei mindestens 30 Vol.-% des Patchmaterials in der Form von dimensionsstabilisierenden Partikeln vorliegen.

8. Verfahren nach Anspruch 7, wobei die Vielzahl von großen Partikeln mindestens einen Abschnitt der dimensionsstabilisierenden Partikel umfasst und vorzugsweise die dimensionsstabilisierenden Partikel geschmolzene Metallsilikate umfassen.

9. Verfahren nach einem der Ansprüche 1 bis 8, wobei das Aufbringen des Patches das Auftragen einer Aufschlämmung umfasst, umfassend das Patchmaterial und einen Fluidträger.

10. Verfahren nach Anspruch 9, wobei die Aufschlämmung das Patchmaterial in einer Menge in einem Bereich von 30 Vol.-% bis 70 Vol.-% der Aufschlämmung umfasst.

11. Verfahren nach Anspruch 9 oder 10, wobei die Aufschlämmung einen Fluidträger umfasst, der einen Dampfdruck bei 20 °C in einem Bereich von 0,1 kPa bis 60 kPa aufweist, und wobei vorzugsweise der Fluidträger 4-Hydroxy-4-methyl-2-pentanon umfasst.

12. Verfahren nach einem der Ansprüche 1 bis 11, wobei das Sintern das Erhitzen mindestens eines Abschnitts der siliziumbasierten Komponente, umfassend das getrocknete Patch, auf eine Betriebstemperatur von mindestens 1000 Grad Celsius umfasst.

13. Verfahren nach Anspruch 12, wobei eine Heizrate des Abschnitts der siliziumbasierten Komponente auf die Betriebstemperatur größer als 3000 Grad Celsius pro Minute ist.

## Revendications

1. Procédé comprenant :
(a) l'application d'une pièce comprenant un matériau de rapiéçage sur une zone endommagée (32, 34, 36) d'un composant à base de silicium (30), dans lequel le matériau de rapiéçage comprend une pluralité de nanoparticules ayant une taille moyenne de particules inférieure à 100 nanomètres, et dans lequel la pluralité de nanoparticules comprend du silicium et/ou un alliage de silicium et/ou de la silice et/ou ou un silicate métallique ;
(b) le séchage de la pièce pour former une pièce séchée ; et
(c) le frittage de la pièce séchée pour former une partie réparée de pièce (42, 44, 46) du composant à base de silicium ; dans lequel
le composant à base de silicium est disposé dans un ensemble de moteur à turbine ;
le frittage est réalisé in situ à l'aide des conditions de fonctionnement du moteur de l'ensemble moteur à turbine ; et
le matériau de rapiéçage comporte une pluralité de particules de stabilisation de dimension.

2. Procédé selon la revendication 1, dans lequel la pluralité de nanoparticules comprend en outre un élément de terres rares.

3. Procédé selon la revendication 1 ou 2, dans lequel le matériau de rapiéçage comprend la pluralité de nanoparticules en une quantité supérieure à 2 pour cent en volume.

4. Procédé selon la revendication 3, dans lequel le matériau de rapiéçage comprend la pluralité de nanoparticules en une quantité dans une plage allant de 3 pour cent en volume à 20 pour cent en volume.

5. Procédé selon l'une quelconque des revendications 1 à 4, dans lequel le matériau de rapiéçage comprend en outre une pluralité de petites particules avec une taille moyenne de particules dans une plage allant de 0,7 micromètre à moins de 5 micromètres ; une pluralité de particules moyennes ayant une taille moyenne de particules dans une plage allant de 5 micromètres à 10 micromètres ; et une pluralité de grandes particules ayant une taille moyenne de particules supérieure à 10 micromètres.

6. Procédé selon la revendication 5, dans lequel la pluralité de petites particules est présente en une quantité allant de 15 pour cent en volume à 35 pour cent en volume, la pluralité de particules moyennes est présente en une quantité allant de 15 pour cent en volume à 35 pour cent en volume, et la pluralité de grandes particules est présente en une quantité allant de 40 pour cent en volume à 65 pour cent en volume du matériau de rapiéçage.

7. Procédé selon la revendication 5 ou 6, dans lequel au moins 30 pour cent en volume du matériau de rapiéçage se présente sous la forme de particules de stabilisation de dimension.

8. Procédé selon la revendication 7, dans lequel la pluralité de grandes particules comprend au moins une partie des particules de stabilisation de dimension, et de préférence les particules de stabilisation de dimension comprennent des silicates métalliques fondus.

9. Procédé selon l'une quelconque des revendications 1 à 8, dans lequel l'application de la pièce comprenant l'application d'une suspension comprend le matériau de rapiéçage et un support fluide.

10. Procédé selon la revendication 9, dans lequel la suspension comprend le matériau de rapiéçage en une quantité dans une plage allant de 30 pour cent en volume à 70 pour cent en volume de la suspension.

11. Procédé selon la revendication 9 ou 10, dans lequel la suspension comprend un vecteur fluide ayant une pression de vapeur à 20 °C dans une plage allant de 0,1 kPa à 60 kPa, et dans lequel de préférence le support fluide comprend 4 hydroxy-4-méthyl-2 pentanone.

12. Procédé selon l'une quelconque des revendications 1 à 11, dans lequel le frittage comprend le chauffage d'au moins une partie du composant à base de silicium comprenant la pièce séchée à une température de fonctionnement d'au moins 1 000 degrés Celsius.

13. Procédé selon la revendication 12, dans lequel un taux de chauffage de la partie du composant à base de silicium à la température de fonctionnement est supérieur à 3 000 degrés Celsius par minute.
